# EUROPEAN PATENT APPLICATION

(11) **EP 2 837 802 A1**
(43) Date of publication of application: **18.02.2015**
(21) Application number: 13775868.6
(22) Date of filing: 07.02.2013
(51) Int. Cl.: F02D 19/08, F02D 19/02, F02M 61/14, F02M 21/02, F02M 37/00, F02D 17/02

(54) **DUAL-FUEL DIESEL ENGINE**

(30) Priority: 11.04.2012 JP 2012090233
(71) Applicant: Mitsubishi Heavy Industries, Ltd., Tokyo 108-8215 (JP)
(72) Inventor: ISHIDA, Hiroyuki, Tokyo 108-8215 (JP); YUUKI, Akihiro, Tokyo 108-8215 (JP); MIYANAGI, Akihiro, Tokyo 108-8215 (JP); HIRAOKA, Naohiro, Tokyo 108-8215 (JP); KOMADA, Yasuyuki, Tokyo 108-8215 (JP)
(74) Representative: Hoffmann Eitle
(86) International application number: PCT/JP2013/052935
(87) International publication number: WO 2013/153843

(57) **Abstract**

An object is to, in a low-load operating range of a dual-fuel diesel engine or a dual-fuel diesel engine unit including a plurality of the dual-fuel diesel engines, reduce the amount of injection of oil fuel so as to make it possible to make exhaust gas less harmful and to reduce fuel cost. On a cylinder head 14, a plurality of dual-fuel injectors 24a, 24b are disposed, each of which having a gas fuel injector 26 that injects a gas fuel being a main fuel and a pilot fuel injector 28 that injects an oil fuel "o". In a low-load operating range where it is not necessary for the dual-fuel injectors 24a, 24b to inject fuel at the same time for ignition, fuel is injected alternately from the dual-fuel injectors 24a, 24b and combusted in every single combustion cycle. As a result, it is possible to halve the amount of injection of oil fuel in the low-load operating range.

## Description

### TECHNICAL FIELD

The present invention relates to a dual-fuel diesel engine in which an oil fuel such as gas oil having high compression-ignition properties is used as a pilot fuel and a gas fuel being a main fuel is combusted by causing self-ignition of the oil fuel.

### BACKGROUND

Conventionally, there has been known a dual-fuel diesel engine in which a gas fuel such as natural gas is used as a main fuel while an oil fuel having high compression-ignition properties is used as a pilot fuel, and the gas fuel being the main fuel is combusted by causing the oil fuel to self-ignite inside a high-temperature combustion chamber. An object of a dual-fuel diesel engine is to use a gas fuel so that emission of CO₂, harmful substances such as black smoke, etc is reduced upon combustion.

Patent Documents 1 and 2 disclose a dual-fuel diesel engine. The dual-fuel diesel engine in Patent Document 1 is configured such that a pilot fuel injection valve is positioned upstream in the direction of a swirl flow of a gas fuel injection valve, and a pilot fuel and a gas fuel are injected in the flowing direction of the swirl, so as to securely ignite the gas fuel. Patent Document 2 proposes a structure for a dual-fuel diesel engine which makes it possible to modify an existing diesel engine to a dual-fuel diesel engine at low cost.

### Citation List

### Patent Literature

Patent Document 1: JPS62-45339 (Utility model application); specification and drawings
Patent Document 2: JP2003-193874

### SUMMARY

### Technical Problem

As described above, in a dual-fuel diesel engine, a gas fuel is used as a main fuel besides an oil fuel so as to make exhaust gas less harmful and to reduce fuel cost. However, due to the structure of an oil fuel injection valve or a gas fuel injection valve, or due to the characteristics of the fuels thereof, a minimum limit amount exists in the injection. Thus, in a part of a low-load operating range, the ratio of the amount of injection of an oil fuel to that of a gas fuel may become higher than a desired value. Accordingly, there is a problem that it is not possible to make exhaust gas less harmful and reduce fuel cost to a desired standard.

The present invention is to, in view of the above problem of the prior art, reduce the amount of oil fuel injection so as to make exhaust gas less harmful and reduce fuel cost in a low-load operating range of a dual-fuel diesel engines.

### Solution to Problem

A dual-fuel diesel engine of the present invention includes a plurality of dual-fuel injectors disposed on a cylinder head, each of the dual-fuel injectors including a pilot fuel injector configured to inject an oil fuel as a pilot fuel into a combustion chamber and a gas fuel injector configured to inject a gas fuel as a main fuel into the combustion chamber. In order to achieve the above object, the dual-fuel diesel engine of the present invention includes an engine control unit capable of performing a first fuel-injection cycle repeatedly, the first fuel-injection cycle being such that only a part of the dual-fuel injectors among the plurality of the dual-fuel injectors inject fuel in a single combustion cycle, and each of the plurality of the dual-fuel injectors injects the fuel at least once in a series of combustion cycles.

In view of the amount of heat that the fuel retains, it is possible to reduce the amount of injection of the oil fuel in each combustion cycle by performing the first fuel-injection cycle in the low-load operating range where it is not necessary to inject the fuel from all of the dual-fuel injectors at the same time in one combustion cycle to ignite the fuel. Thus, it is possible to increase the ratio of the gas fuel so as to perform complete combustion. As a result, it is possible to make exhaust gas less harmful and to reduce fuel cost.

In this first fuel-injection cycle, for instance, in the case where two dual-fuel injectors are disposed on the cylinder, the two dual-fuel injectors inject fuel alternately in every combustion cycle. In the case where three dual-fuel injectors are disposed, for instance, the dual-fuel injectors inject fuel one at a time in rotation, or two of the dual-fuel injectors inject fuel at the same time and then remaining one of the dual-fuel injectors injects fuel in the next combustion cycle. In the case there are four dual-fuel injectors provided, fuel is injected according to this. In the above fuel-injection cycle, fuel is injected not from particular dual-fuel injectors but from all of the dual-fuel injectors evenly. As a result, it is possible to prevent abrasion or burnout from disproportionately occurring in particular dual-fuel injectors.

By disposing two dual-fuel injectors on the cylinder so that the two dual-fuel injectors inject fuel alternately in every combustion cycle, it becomes easier to control operation of the dual-fuel injectors. Thus, it becomes unnecessary to provide a complex control mechanism. As a result, it is possible to reduce the cost for the control mechanism.

Further, a low-load operating range in which the first fuel-injection cycle is started may be set in advance for the engine control unit, and the first fuel-injection cycle may be operated by the engine control unit in the low-load operating range. As a result, it is possible to automate operation of the first fuel-injection cycle.

Still further, for the dual-fuel diesel engine of the present invention having a plurality of cylinders, it may be configured such that the engine control unit is capable of performing the first fuel-injection cycle in each of the cylinders repeatedly, and the engine control unit is capable of performing a second fuel-injection cycle repeatedly, the second fuel-injection cycle being such that only a part of the cylinders among the plurality of the cylinders perform the first fuel-injection cycle in a single combustion cycle, and each of the plurality of the cylinders performs the first fuel-injection cycle at least once in a series of combustion cycles.

As described above, when there are a plurality of cylinders, it is possible to synergistically reduce the amount of injection of the oil fuel by performing in combination the first fuel-injection cycle in each cylinder and the second fuel combustion cycle with the plurality of cylinders. As a result, it is possible to further make exhaust gas harmless and reduce fuel cost.

Further, a low-load operating range in which the first fuel-injection cycle and the second fuel-injection cycle are performed may be set in advance for the engine control unit, so that the engine control unit performs the above fuel-injection cycle and the second fuel-injection cycle in the low-load operating range. As a result, it is possible to automate simultaneous operation of these two fuel-injection cycles.

### Advantageous Effects

According to the dual-fuel diesel engine of the present invention, it is possible to reduce the amount of injection of the oil fuel in each combustion cycle by causing a part of the dual-fuel injectors among the plurality of the dual-fuel injectors to inject fuel and to combust the fuel in one combustion cycle. As a result, it is possible to maintain the ratio of amount of injection of the oil fuel to that of the gas fuel to be in a range where complete combustion is possible, and thus it is possible to make the exhaust gas less harmful and to reduce the fuel cost. Further, all of the dual-fuel injectors inject fuel at least once in a series of combustion cycles, which makes it possible to prevent abrasion, burnout, or the like from occurring disproportionally in particular dual-fuel injectors.

### BRIEF DESCRIPTION OF DRAWINGS

FIG. 1 is a front cross-sectional view of one embodiment of a dual-fuel diesel engine of the present invention.
FIG. 2 is a side cross-sectional view of the dual-fuel diesel engine according to the above embodiment.
FIG. 3A is a diagram of a fuel injection mode of the dual-fuel diesel engine according to the above embodiment, and FIG. 3B is a diagram of a fuel injection mode of a conventional dual-fuel diesel engine.
FIGs. 4A and 4B are explanatory diagrams of fuel injection type of the dual-fuel injection according to the above embodiment.
FIGs. 5A and 5B are illustrations of a partial configuration of the dual-fuel diesel engine according to the above embodiment. FIG. 5A is a front cross-sectional view of a gas fuel injector and FIG. 5B is a front cross-sectional view of an oil fuel injector.
FIGs. 6A and 6B are schematic diagrams of one embodiment of a dual-fuel diesel engine unit according to the present invention.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

### (First embodiment)

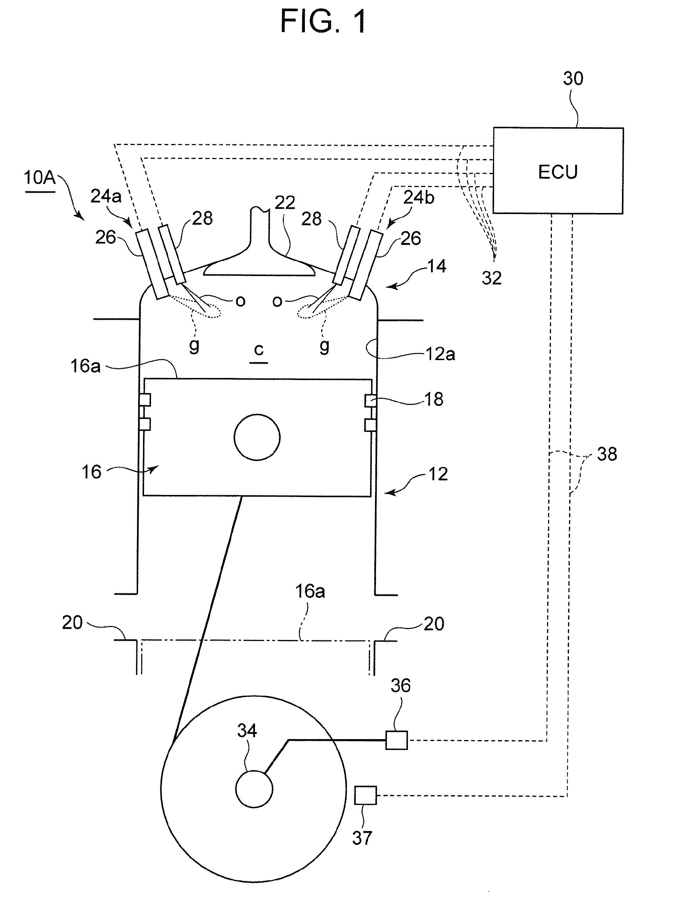

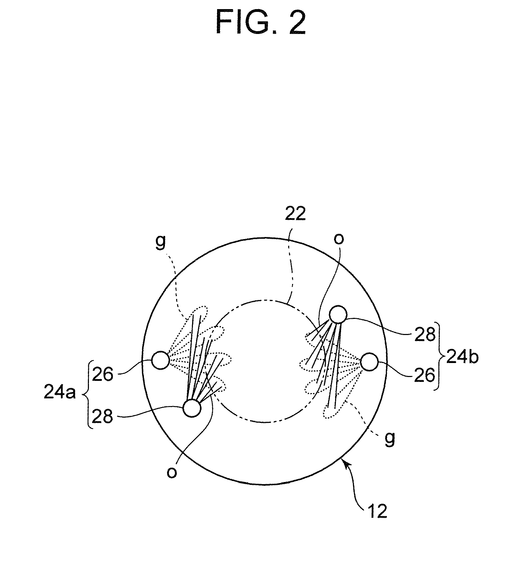

The first embodiment of a dual-fuel diesel engine of the present invention will be described in reference to FIGs. 1 to 5B. The present embodiment is an example where the present invention is applied to a two-cycle dual-fuel diesel engine.

As illustrated in FIG. 1, a dual-fuel diesel engine 10A of the present embodiment includes a cylinder 12 of a cylindrical shape, a cylinder head 14 connected to the upper end of the cylinder 12, and a piston 16 housed inside the cylinder 12 so as to be freely reciprocable. A combustion chamber "c" is defined by the surrounding wall 12a of the cylinder 12, the cylinder head 14, and the top face 16a of the piston 16. Piston rings 18 are disposed on the outer circumferential face of the piston 16 so as to seal a gap between the outer circumferential face of the piston 16 and the surrounding wall 12a of the cylinder 12.

On the surrounding wall 12a at a bottom region of the cylinder 12, a plurality of scavenging ports 20 are opened with equal intervals in the circumferential direction. The scavenging ports 20 are formed above the top face 16a of the piston 16 at the region of the bottom dead center (as indicated by the double-dotted chain line in the drawing). Upon the piston 16 being positioned in the region of the bottom dead center, air is supplied to the combustion chamber "c" from the scavenging ports 20.

Further, while an exhaust port opens at the center of the cylinder head 14, an exhaust valve 22 is disposed on the exhaust port for opening and closing the exhaust port. In the scavenging stroke in which the piston 16 ascends, this exhaust valve 22 is kept open until the piston 16 reaches the position of approximately 100° before top dead center. Accordingly, the air supplied to the combustion chamber "c" from the scavenging ports 20 scavenge the exhaust gas that has remained in the combustion chamber "c" from the previous stroke.

On the cylinder head 14, a pair of dual-fuel injectors 24a, 24b is disposed around the exhaust valve 22. The dual-fuel injectors 24a, 24b are arranged so that they are symmetric about the central axis line of the cylinder 12 with an interval of 180° from each other. Each of the dual-fuel injectors 24a, 24b includes a gas fuel injector 26 that injects a gas fuel "g" such as natural gas to the combustion chamber "c" and a pilot fuel injector 28 that similarly injects an oil fuel "o" having high compression-ignition properties to the combustion chamber "c".

The gas fuel injector 26 and the pilot fuel injector 28 are connected to an engine control unit (ECU) 30 by cables 32, so that operation of fuel injection is controlled by the ECU 12. The ECU 12 is connected to a crank angle sensor 36 that detects a rotation angle of a crank shaft 34 and to a rotation speed sensor 37 that detects a rotation speed of the crank shaft 34 through cables 38. The ECU 12 detects a phase of the piston 16 by receiving a detection signal of a rotation angle of the crank shaft 34 from the crank angle sensor 36 through one of the cables 38. Further, the ECU 12 detects load factor of the dual-fuel diesel engine 10 from a detection value of the rotation speed sensor 37 through one of the cables 38.

The gas fuel injector 26 and the pilot fuel injector 28 inject a gas fuel "g" and an oil fuel "o" into the combustion chamber "c" at a predetermined timing based on a signal transmitted from the ECU 12. Upon the piston 16 being in the vicinity of the top dead center (for instance, at 0° to 100° before top dead center), the gas fuel injector 26 and the pilot fuel injector 28 inject their corresponding fuel nearly at the same time. In the combustion chamber "c" of a high-temperature atmosphere, the oil fuel "o" having high compression-ignition properties self-ignites, which causes the gas fuel "g" injected nearly at the same time so as to generate flame in the combustion chamber "c".

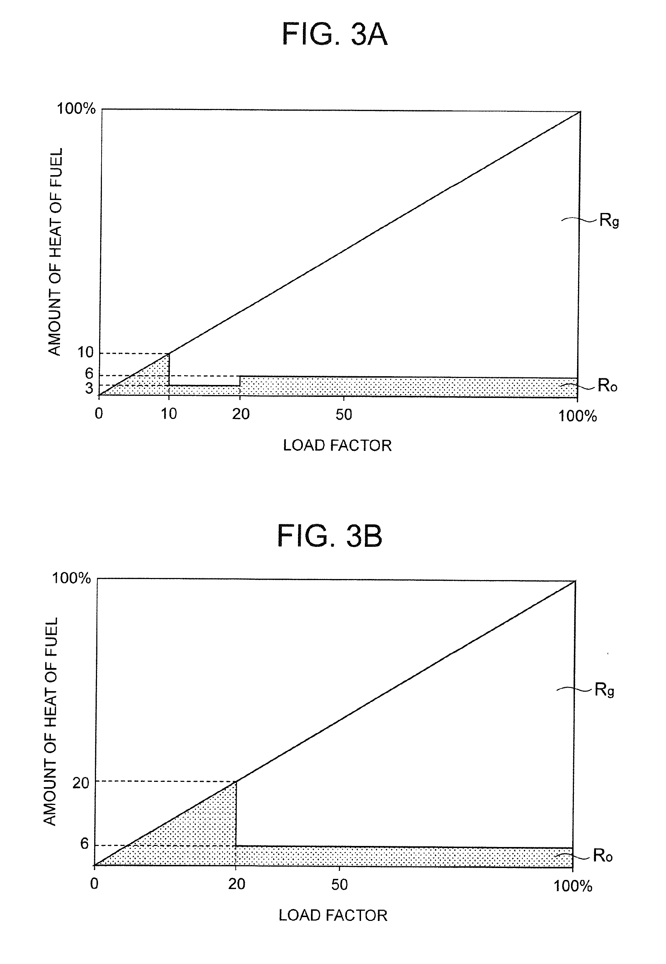

FIG. 3A is a diagram of a fuel injection mode of the dual-fuel diesel engine 10A, and FIG. 3B is a diagram of a fuel injection mode of a conventional dual-fuel diesel engine. In FIGs. 3A and 3B, x-axis is the load factor of the dual-fuel diesel engine 10 and y-axis is the total amount of heat of the injected fuel. Rg represents the gas fuel region and Ro represents the oil fuel region. As described above, the gas fuel injector 26 and the pilot fuel injector 28 have a minimum limit amount for injection due to their structural reasons or the characteristics of their fuels. In FIGs. 3A and 3B, the minimum limit amount of injection (amount of heat) for one gas fuel injector 26 is 7%, and the minimum limit amount of injection (amount of heat) for one pilot fuel injector 28 is 3%. Further, in an extremely-low-load operating range, i.e., in a range where the load factor is from 0 to 10%, only the oil fuel is injected in view of ignition performance.

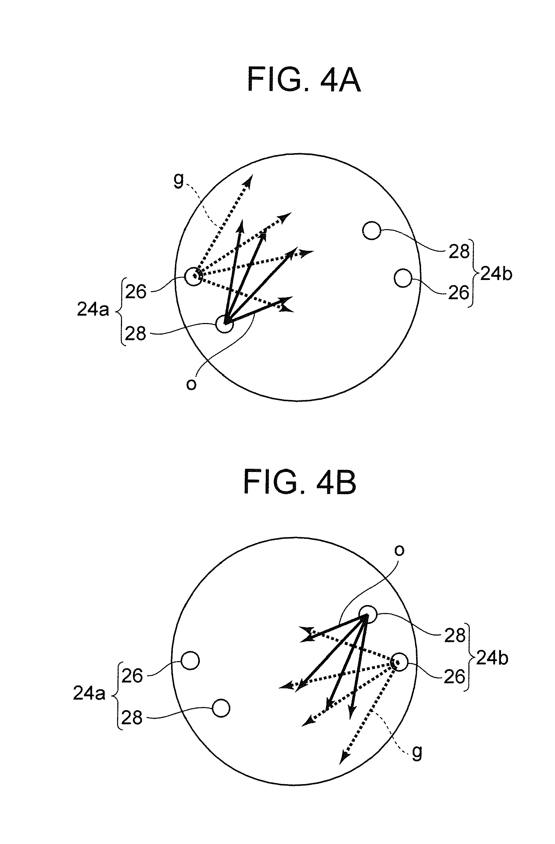

In a range where the load factor exceeds 20%, fuel is injected from both of the dual-fuel injectors 24a, 24b. However, in the low-load operating range where the load factor is from 10 to 20%, there is a problem that the ratio of the amount of the oil fuel injection is too high so that it is not possible to make the exhaust gas less harmful and reduce the fuel cost to the desired standard. Thus, in the present embodiment, in the range where the load factor is from 10 to 20%, operations of the gas fuel injectors 26 and the pilot fuel injectors 28 are controlled by the ECU 12 so as to achieve a fuel-injection cycle in which the fuel is injected by a pair of dual-fuel injectors 24a and 24b alternately in every combustion cycle. This fuel-injection cycle will now be described in reference to FIGs. 4A and 4B.

As illustrated in FIG. 4A, when the piston 16 is at a fuel injecting timing at the vicinity of the top dead center, the gas fuel injector 26 and the pilot fuel injector 28 of the dual-fuel injectors 24a inject their corresponding fuels. In FIG. 4B, in the subsequent combustion cycle, the gas fuel injector 26 and the pilot fuel injector 28 of the dual-fuel injectors 24b inject fuels. This is alternately performed in every combustion cycle. As a result, as illustrated in FIG. 3A, it is possible to reduce the amount of injection (amount of heat) of the oil fuel to 3% in the load factor range of from 10 to 20%.

On the other hand, in the conventional fuel injection mode illustrated in FIG. 3B, a pair of dual-fuel injectors 24a and 24b inject fuel at the same time. Thus, gas fuel cannot be injected in the load factor range of not greater than 20%. Accordingly, only oil fuel is injected from the dual-fuel injectors 24a, 24b, which inevitably increases the amount of injection of the oil fuel.

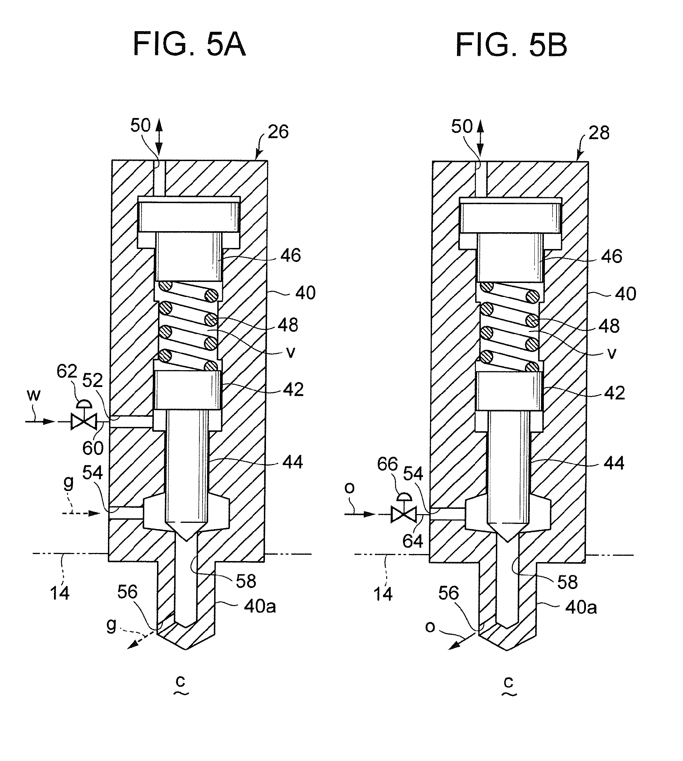

FIG. 5A is an example of configuration of the gas fuel injector 26, and FIG. 5B is an example of configuration of the pilot fuel injector 28. As to the gas fuel injector 26 of FIG. 5A, a space "v" is defined inside a cylindrical housing 40 in the axial direction. The space "v" houses a needle valve 44 integrated with a piston 42 and a piston 46 for increasing spring force so that they are freely slidable. A coil spring 48 is interposed between the piston 42 and the piston 46 for increasing spring force. On the cylindrical housing 40, a flow path 50 communicating with a space at the top face side of the piston 46 for increasing spring force, a flow path 52 that supplies working oil "w" to a space at the bottom face side of the piston 42, and a flow path 54 that supplies the gas fuel "g" are formed by boring. Further, a nozzle hole 56 is formed by boring on an injecting part 40a disposed in the combustion chamber "c".

A working oil supply path 60 is connected to the flow path 52, and an electromagnetic opening-and-closing valve 62 is disposed in the working oil supply path 60. Once the electromagnetic opening-and-closing valve 62 is opened by a command of the ECU 12 and the working oil "w" is supplied to the flow path 52, the needle valve 44 ascends so that the flow path 52 communicates with the nozzle hole 56 through a flow path 58. Thus, the gas fuel "g" supplied from a flow path 54 is injected into the combustion chamber "c" from the nozzle hole 56. When the working oil "w" is not supplied to the flow path 52, the flow path 58 is blocked by the needle valve 44 and thus the gas fuel "g" is not injected into the combustion chamber "c". Also, spring force of the coil spring 48 acting on the needle valve 44 can be adjusted by supplying working oil or working air to the flow path 50.

In FIG. 5B, the configuration of the pilot fuel injector 28 is similar to that of the gas fuel injector 26 besides that there is no flow path 52. An oil fuel supply path 64 is connected to the flow path 54 and an electromagnetic opening-and-closing valve 66 is disposed in the oil fuel supply path 64. Once the electromagnetic opening-and-closing valve 66 is opened by a command of the ECU 12 and the oil fuel "o" is supplied to the flow path 54, the needle valve 44 ascends due to the pressure of the oil fuel "o" so that the flow path 54 communicates with the flow path 58. Thus, the oil fuel "o" is injected into the combustion chamber "c" from the nozzle hole 56.

For the gas fuel injector 26, it is possible to control injection of the gas fuel "g" by controlling supply of the working oil "w" by the ECU 12. For the pilot fuel injector 28, it is possible to control injection of the oil fuel "o" by controlling supply of the oil fuel "o" by the ECU 12. In the present embodiment, once the load factor of the dual-fuel diesel engine 10 falls in the range of from 10 to 20%, the ECU 12 automatically shifts to the fuel-injection cycle illustrated in FIGs. 4A and 4B. Herein, the configurations of the gas fuel injector 26 and the pilot fuel injector 28 are not limited to the configurations illustrated in FIGs. 5A and 5B.

According to the present embodiment, a pair of dual-fuel injectors 24a, 24b is configured to inject fuel alternately. Thus, it is possible to halve the minimum limit amount of injection for the oil fuel "o" in the low-load operating range. As a result, it is possible to maintain the ratio of amount of injection of the oil fuel "o" to that of the gas fuel "g" to be in the range where complete combustion is possible, and thus it is possible to make the exhaust gas less harmful and to reduce the fuel cost compared to the conventional case. Further, since a pair of dual-fuel injectors 24a, 24b inject fuel alternately, it is possible to prevent abrasion, burnout, or the like from occurring disproportionally in one of the dual-fuel injectors.

Still further, by causing the pair of dual-fuel injectors 24a, 24b to inject alternately, it becomes relatively easier to control the dual-fuel injectors 24a, 24b by the ECU 12, which makes it possible to reduce the cost of a control mechanism. Moreover, by the ECU 12, it is possible to automate performing the fuel combustion cycle in the range where the load factor of the dual-fuel diesel engine 10 is from 10 to 20%.

Herein, by providing three dual-fuel injectors for one cylinder so that the three dual-fuel injectors inject fuel one by one in order in every combustion cycle, it is possible to reduce the amount of injection (amount of heat) for the oil fuel to 2% in the load factor range of from 10 to 16%. By providing four dual-fuel injectors, it is possible to further reduce the amount of injection (amount of heat) for the oil fuel.

### (Second embodiment)

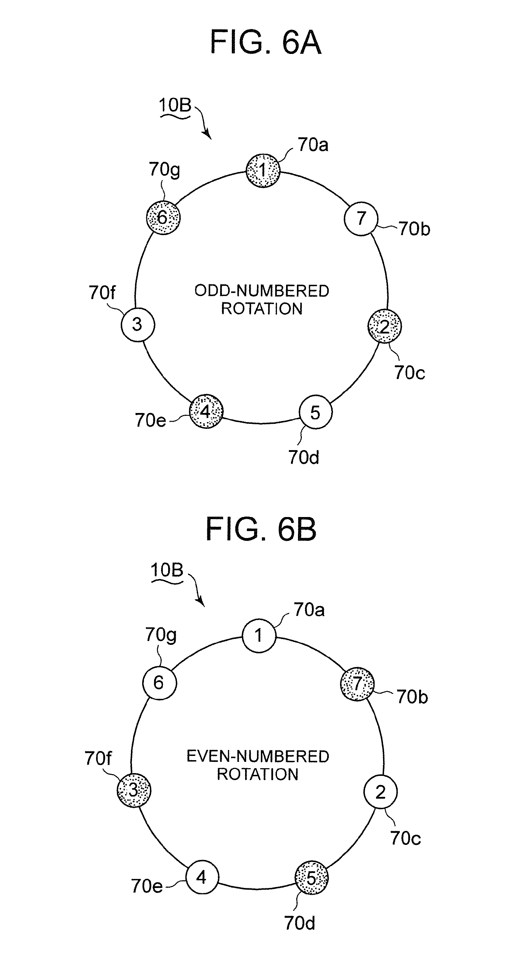

Next, one embodiment of a dual-fuel diesel engine unit of the present invention will be described in reference to FIGs. 6A and 6B. A dual-fuel diesel engine unit 10B of the present embodiment includes a plurality of cylinders (seven in FIG. 6) each having the similar configuration to that of the cylinder 12 of the dual-fuel diesel engine 10A in the above embodiment. Each of the seven cylinders 70a to 70g is controlled by the ECU 12 so as to perform a fuel-injection cycle similar to that of the above embodiment. That is, each of the cylinders 70a to 70g includes a pair of dual-fuel injectors 24a and 24b, which inject fuel alternately.

FIG. 6A illustrates a state upon an odd-numbered rotation and FIG. 6B illustrates a state upon an even-numbered rotation of the crank shaft 34. By the ECU 12, in a combustion cycle upon an odd-numbered rotation of the crank shaft 34, a first group of cylinders 70a, 70c, 70e and 70g among the seven cylinders 70a to 70g inject fuel from the dual-fuel injectors 24a, 24b for ignition. Meanwhile, fuel injection of a second group of cylinders 70b, 70d, and 70f is stopped. Upon the injection timing at an even-numbered rotation of the crank shaft 34, fuel injection of the first group is stopped and fuel injection of the second group is performed, contrary to the case of the odd-numbered rotation. The above operation is performed alternately.

According to the present embodiment, compared to a conventional dual-fuel diesel engine having the same configuration, it is possible to halve oil fuel in each cylinder. Further, as the fuel-injection cycle is performed by the dual-fuel diesel engine as a whole, it is possible to reduce the amount of injection of the oil fuel to a quarter compared to the conventional case. While the cylinders 70a to 70g are divided into two groups to perform fuel injection and ignition alternately in the present embodiment, the cylinders 70a to 70g may be divided into three groups or more instead so that the three groups or more perform fuel injection and ignition one by one in order. As a result, it is possible to further reduce the amount of injection of the oil fuel.

While the above first and second embodiments are both an example where the present invention is applied to a two-cycle dual-fuel diesel engine, the present invention can be also applied to a four-cycle dual-fuel diesel gas engine.

### Industrial Applicability

According to the present invention, in the low-load operating range of the dual-fuel diesel engine, it is possible to reduce the ratio of the amount of injection of oil fuel to the amount of injection of gas fuel, which makes it possible to make exhaust gas less harmful and to reduce fuel cost.

## Claims

1. A dual-fuel diesel engine comprising:
a plurality of dual-fuel injectors disposed on a cylinder head, each of the dual-fuel injectors including a pilot fuel injector configured to inject an oil fuel as a pilot fuel into a combustion chamber and a gas fuel injector configured to inject a gas fuel as a main fuel into the combustion chamber; and
an engine control unit capable of performing a first fuel-injection cycle repeatedly, the first fuel-injection cycle being such that only a part of the dual-fuel injectors among the plurality of the dual-fuel injectors inject fuel in a single combustion cycle, and each of the plurality of the dual-fuel injectors injects the fuel at least once in a series of combustion cycles.

2. The dual-fuel diesel engine according to claim 1,
wherein two of the dual-fuel injectors are disposed on the cylinder, and
wherein the first fuel-injection cycle is configured such that the two dual-fuel injectors alternately inject the fuel in every single combustion cycle.

3. The dual-fuel diesel engine according to claim 1,
wherein a load operating range in which the first fuel-injection cycle is performed is set in advance for the engine control unit, and
wherein the first fuel-injection cycle is performed by the engine control unit in the load operating range.

4. The dual-fuel diesel engine according to any of claims 1 to 3,
wherein the dual-fuel diesel engine includes a plurality of cylinders,
wherein the engine control unit is capable of performing the first fuel-injection cycle in each of the cylinders, and
wherein the engine control unit is capable of performing a second fuel-injection cycle repeatedly, the second fuel-injection cycle being such that only a part of the cylinders among the plurality of the cylinders perform the first fuel-injection cycle in a single combustion cycle, and each of the plurality of the cylinders performs the first fuel-injection cycle at least once in a series of combustion cycles.

5. The dual-fuel diesel engine according to any of claim 4,
wherein a load operating range in which the first fuel-injection cycle and the second fuel-injection cycle are performed is set in advance for the engine control unit, and
wherein the first fuel-injection cycle and the second fuel-injection cycle are performed by the engine control unit upon reaching the load operating range.
